# EUROPEAN PATENT SPECIFICATION

(11) **EP 0 318 606 B1**
(45) Date of publication and mention of the grant of the patent: **11.08.1993**
(21) Application number: 87117700.2
(22) Date of filing: 30.11.1987
(51) Int. Cl.: B65D 5/74, B65D 77/20

(54) **Opening/closing device for a mouth of a container and process for making the same**
Verschluss- und Öffnungsvorrichtung für eine Behältermündung und Verfahren für ihre Herstellung
Dispositif d'ouverture et de fermeture de l'orifice d'un récipient et procédé pour sa réalisation

(43) Date of publication of application: 07.06.1989
(73) Proprietor: Mikasa Sangyo Kabushiki Kaisha, Kitakatsuragi-gun Nara-ken (JP); Jujo Paper Co., Ltd., Kita-ku Tokyo 115-91 (JP)
(72) Inventor: Hayashida, Mitsuharu, Kitakatsuragi-gun Nara-ken (JP); Sasaki, Kazuo c/o Jujo Paper Co.Ltd., Kita-ku Tokyo (JP); Yasui, Nobusige c/o Jujo Paper Co.Ltd., Kita-ku Tokyo (JP); Takahashi, Eiji c/o Jujo Paper Co.Ltd., Kita-ku Tokyo (JP)
(74) Representative: Tetzner, Volkmar, Dr.-Ing. Dr. jur.

(56) References cited:
- FR-A- 2 545 470
- US-A- 4 131 211

## Description

The invention relates to an opening/closing device for a container, comprising
a) a cylindrical pouring mouth made of synthetic resin,
b) a lid connected integrally with a part of the inside of said pouring mouth via a weakened hinge portion, comprising a groove,
c) a gap space formed between said lid and the inner surface of said pouring mouth,
d) a compound film which includes a metal foil with synthetic resin layers coated on its both surfaces, and bonded so as to straddle both the upper surface of said lid and the upper surface of said pouring mouth, and provided with a nip portion for peeling said film from said pouring mouth,
e) said pouring mouth having a mount portion for mounting it to the mouth of the container.

Furthermore, the invention relates to a process of making an opening/closing device for a container.

An opening/closing device of the above cited kind is known from JP-U-62-69435 and is shown in Fig.19 to 21 of the present application.

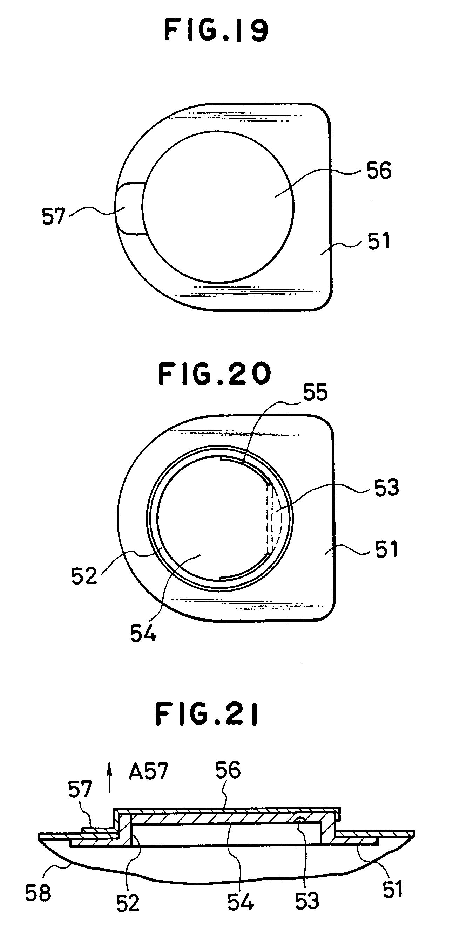

In Figs. 19 to 21, reference numeral 51 designates a mount portion, numeral 52 designates a pouring mouth, numeral 53 designates a hinge portion and numeral 54 designates a lid. The entire assembly is formed of synthetic resin. Reference numeral 55 designates a gap space for improving the hinge effect. In addition, a compound film 56 is made adhere onto the upper surface of the assembly, that is, onto the upper surface of the lid 54 and the upper surface of the pouring mouth 52. By way of example, this compound film 56 consists of an aluminium foil with synthetic resin layers (not shown) formed on its both surfaces. The lid 54 is formed so as to have a slightly larger diameter than the pouring mouth 52.

The above-mentioned device is mounted on a paper container or the like. It is to be noted that in Figs. 19 and 21, reference numeral 57 designates a nip portion of the compound film 56. A user of a container 58 nips said nip portion 57 and pulls it in the direction of arrow A57 to open the lid 54, so that he can pour out the liquid in the container 58. For instance, this device is provided on a paper container containing milk; when the device has been opened to drink a part of the milk, for accommodating the rest in a refrigerator, the device can be closed in a simple manner by pushing the lid 54 from the outside into the pouring mouth 52.

However, in such a device, since the lid 54 is formed so as to have a larger diameter then the pouring mouth 52 although slightly, it is somewhat difficult to push the lid 54 into the pouring mouth 52, and it necessitates some efforts. Consequently, in some cases the device is used with the lid 54 not perfectly pushed into the pouring mouth although it is pushed in the desired direction, and in such cases there is a fear that floating dust and dirt in the atmosphere may possibly enter the container through the pouring mouth.

Furthermore, it was discovered that this known device involves problems also with respect to the process for making the same. That is, in case of thermally bonding the compound film 56 onto the upper surface of the pouring mouth 52, a support table (not shown) is applied to the lower surface of lid 54 and the compound film 56 is pressed from above while it is being heated by means of a heating plate (not shown). However, it is impossible to press the upper surfaces of the lid 54 and the pouring mouth 52, respectively, with the most appropriate pressures as the pressing is effected for both the upper surfaces of the lid 54 and the pouring mouth 52 in one action. Consequently, the compound film 56 will be strongly bonded to the upper surface of the pouring mouth 52, resulting in the problem that upon use the compound film 56 can be hardly peeled from the pouring mouth 52. This is caused also from a further reason. In Japan synthetic resin to be used on the inside of a paper container or the like for containing milk is limited to polyethylene; if the pouring mouth 52 and the inner surface coating of the compound film 56 are both made of polyethylene, they will be very strongly bonded because of the same kind of resin.

It is the object of the invention to provide an opening/closing device of the above cited kind which can very easily and fully satisfactorily close the pouring mouth following to an initial opening of the device. Furthermore, it is an object of the invention to provide a process for making an opening/closing device in which the bonded compound film can be easily peeled off.

According to the invention this object is solved by an opening/closing device characterized in that:
f) said gap space is formed along the entire circumference of said pouring mouth except said hinge protion;
g) said compound film is thermally bonded to the top end surface of said pouring mouth in such a way that it is relatively strongly bonded onto an annular part of said top end surface, and relatively weakly bonded onto the adjacent part of said top end surface.

According to the invention the process of making an opening/closing device for a container includes the following steps:
a) forming a cylindrical pouring mouth of synthetic resin comprising a mount portion for mounting the pouring mouth to the mouth of the container and a cylindrical top end with an annular protrusion extending from its end surface, a lid being integrally connected via a hinge portion to the inside of said pouring mouth,
b) providing a compound film made of a metal foil coated on its both surfaces with synthetic resin layers, and positioning said compound film so as to straddle both the top end surface of said pouring mouth and the surface of said lid,
c) positioning a support table at the inside beneath said lid and below said mount portion,
d) positioning said compound film both on the surface of said protrusion and on the surface of said lid;
e) and thermally bonding said compound film to said protrusion and said lid by heating and pressing them together, whereby said compound film is relatively strongly bonded in that part of the top end surface including said protrusion and its proximity and is relatively weakly bonded to the ajacent part of said top end surface.

Some embodiments of the invention are shown in the enclosed drawing.
Fig. 1 is a side view of a paper container provided with an opening/closing device for a mouth of a container according to the present invention;
Fig. 2 is a side view of a bottle provided with an opening/closing device for a mouth of a container according to the present invention;
Fig. 3 is a side view of a bottle provided with an opening/closing device for a mouth of a container according to the present invention;
Fig. 4 is a bottom view of an opening/closing device according to the present invention;
Fig. 5 is a cross-section side view of the same device;
Fig. 6 is a cross-section front view of the same device;
Fig. 7 is a plan view of a compound film to be used in the same opening/closing device;
Fig. 8 is a plan view of the same opening/closing device;
Fig. 9 is an enlarged partial cross-section view of a compound film to be used in the same opening/closing device;
Fig. 10 is a side view of the same opening/closing device;
Fig. 11 is a schematic view for explaining the opening of the same opening/closing device;
Fig. 12 is a schematic view for explaining the closing of the same opening/closing device;
Fig. 13 is a perspective view of a part of an opening/closing device according to the present invention;
Figs. 14 to 16, respectively, are cross-section views of top end portions of various types of pouring mouths;
Fig. 17 is a schematic view for explaining the thermally bonding of a compound film onto a pouring mouth;
Fig. 18 is a cross-section view of a top end portion of a pouring mouth after a compound film has been thermally bonded thereto;
Fig. 19 is a plan view of the already described known opening/closing device according JP-11-62-69435;
Fig. 20 is a bottom view of the same device; and
Fig. 21 is a cross-section side view of the same device.

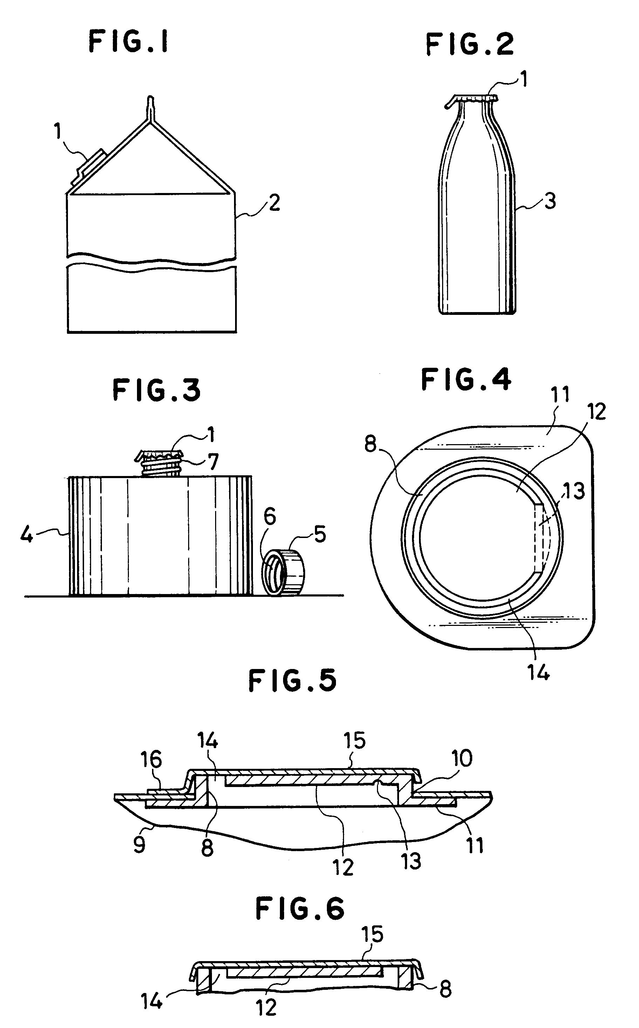

In Figs. 1 to 3, reference numeral 1 designates opening/closing devices for a mouth of a container, which are provided respectively on a paper container 2, a bottle 3 and a can 4. It is to be noted that while the opening/closing device according to the present invention is employed in the illustrated state in these cases, in addition thereto an outer cap 5 made of synthetic resin as shown in Fig. 3 could be used. Reference numerals 6 and 7 designate screw threads. In Figs. 4 to 6, reference numeral 8 designates a cylindrical pouring mouth which is made of synthetic resin such as, for example, polyethylene and which has a mount portion 11 to be mounted to a mouth 10 of a container 9. It is to be noted that although this mount portion 11 is formed in a flange shape, in the case of mounting a pouring mouth onto a bottle or the like, a pouring mouth is formed of an inner cylinder and an outer cylinder integrated in a coaxial manner, and the pouring mouth is mounted by pinching a mouth portion of a bottle between the inner and outer cylinders. Or else, in the case of making the bottle 3 of plastics or the like, the mount portion 11 could be formed integrally with the mouth portion of the bottle.

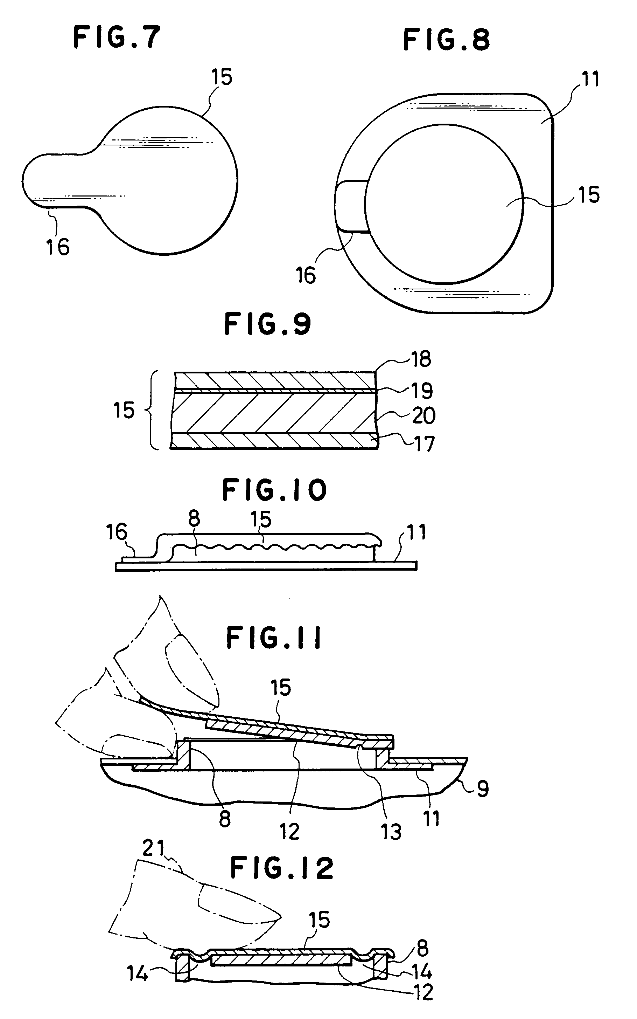

Reference numeral 12 designates a lid which is integrally provided at a part of the inside of the pouring mouth 8 via a hinge portion 13. It is to be noted that by forming a groove on the inside of the hinge portion 13 it may be easily bent upwards but hardly bent downwards. Reference numeral 14 designates a gap space, and numeral 15 designates a compound film. This compound film 15 has a nip portion 16 as shown in Fig. 7 and has synthetic resin layers 17 and 18 on its opposite surfaces as shown in Fig. 9. Synthetic resin layer 17 is made of, for example, polyethylene, while synthetic resin layer 18 is made of resin that is relatively rigid, for instance, polyethylene terephthalate. Reference numeral 19 designates an adhesive layer, and numeral 20 designates a metal foil which is formed of, for example, an aluminum foil.

When a user uses this opening/closing device, he nips the nip portion 16, pulls it up as shown in Fig. 11, whereby the compound film 15 is peeled from the pouring mouth 8 and the lid 12 is opened and bent at the hinge 13; then the content of the container 9 can be poured out to be served for drinking.

When a rest of the content still remains in the container and is to be stored, as shown in Fig. 12 the lid 12 is closed as accommodated within the pouring mouth 8, and the portion of the upper surface of the compound film 15 corresponding to the gap space 14 is pressed by a finger 21 or the like. The compound film 15 thereby enters into the gap space 14 while being partly deformed as shown in Fig. 12; this deformed portion fills the gap space 14 so as to sealingly close the gap space, and also the deformation of the compound film 15 can be maintained by the gap space 14. Only by merely pressing with a finger 21 the pouring mouth 8, therefore, can be sealingly closed in a very effective manner.

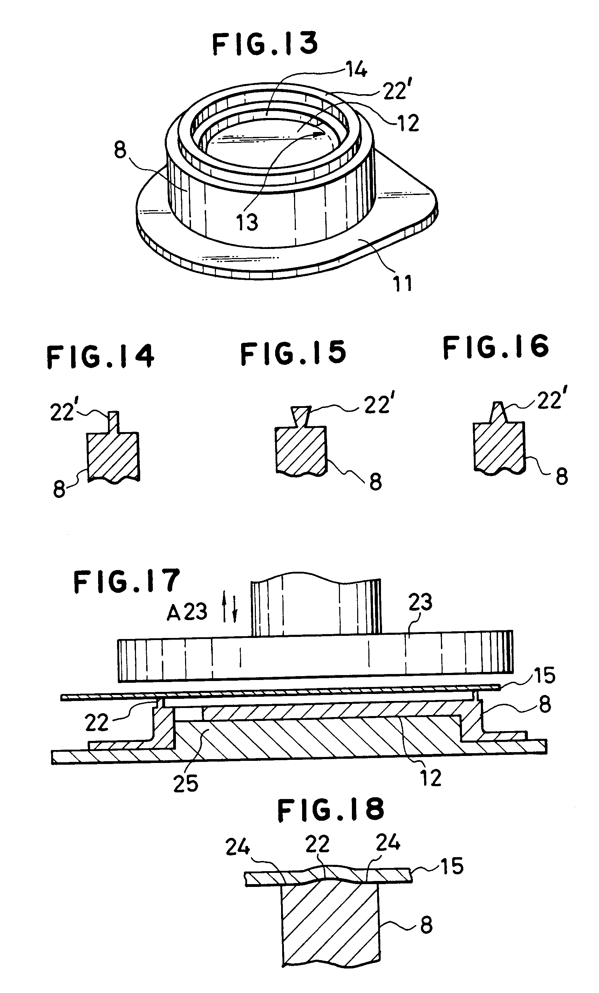

As shown in Fig. 13, an annular protrusion 22' is provided integrally on the top end surface of the pouring mouth 8. This annular protrusion 22' can have different cross-section configurations as shown in Figs. 14 to 16. In Fig. 17, reference numeral 23 designates a heating plate made of metal which can be reciprocated in the direction of arrows A23; thereby a compound film 15 can be pressed and heated so that it may be thermally bonded to both the lid 12 and the pouring mouth 8. At this instance the above-mentioned annular protrusion 22' will be molten and deformed nearly as shown in Fig. 18. Consequently, the portion of the top end of the pouring mouth 8 in the proximity of the annular protrusion 22' is thermally bonded relatively strongly to the compound film 15, whereas the adjacent part 24 is thermally bonded relatively weakly. Therefore, upon use the compound film 15 can be easily peeled off. As described above, owing to the fact that the annular protrusion 22' is provided on the top end surface of the pouring mouth 8, even if both the lid 12 and the pouring mouth 8 are thermally bonded to the compound film 15 at the same time, they will be bonded in such manner that upon use the compound film 15 can be very easily peeled from the pouring mouth 8. As a matter of course, instead of the heating plate 23 a welder section in a high frequency welder, a supersonic welder or the like could be employed. In Fig. 17, reference numeral 25 designates a support table.

## Claims

1. An opening/closing device for a container (2, 3, 4, 9), comprising
a) a cylindrical pouring mouth (8) made of synthetic resin,
b) a lid (12) connected integrally with a part of the inside of said pouring mouth (8) via a weakened hinge portion (13), comprising a groove,
c) a gap space (14) formed between said lid (12) and the inner surface of said pouring mouth (8),
d) a compound film (15) which includes a metal foil (20) with synthetic resin layers (17, 18) coated on its both surfaces, and bonded so as to straddle both the upper surface of said lid (12) and the upper surface of said pouring mouth (8), and provided with a nip portion (16) for peeling said film from said pouring mouth,
e) said pouring mouth (8) having a mount portion (11) for mounting it to the mouth of the container,
characterized in that:
f) said gap space (14) is formed along the entire circumference of said pouring mouth (8) except said hinge protion (13);
g) said compound film (15) is thermally bonded to the top end surface of said pouring mouth (8) in such a way that it is relatively strongly bonded onto an annular part (22) of said top end surface, and relatively weakly bonded onto the adjacent part (24) of said top end surface.

2. A process of making an opening/closing device for a container, including the following steps:
a) forming a cylindrical pouring mouth (8) of synthetic resin comprising a mount portion (11) for mounting the pouring mouth to the mouth of the container and a cylindrical top end with an annular protrusion (22') extending from its end surface, a lid (12) being integrally connected via a hinge portion (13) to the inside of said pouring mouth,
b) providing a compound film (15) made of a metal foil (20) coated on its both surfaces with synthetic resin layers (17, 18), and positioning said compound film (15) so as to straddle both the top end surface of said pouring mouth (8) and the surface of said lid (12),
c) positioning a support table (25) at the inside beneath said lid (12) and below said mount portion (11),
d) positioning said compound film (15) both on the surface of said protrusion (22') and on the surface of said lid (12);
e) and thermally bonding said compound film (15) to said protrusion (22') and said lid (12) by heating and pressing them together, whereby said compound film (15) is relatively strongly bonded in that part of the top end surface including said protrusion (22') and its proximity and is relatively weakly bonded to the ajacent part (24) of said top end surface.

## Patentansprüche

1. Öffnungs-/Verschlußvorrichtung für einen Behälter (2, 3, 4, 9), enthaltend
a) eine aus Kunstharz hergestellte, zylindrische Gießmündung (8),
b) einen Deckel (12), der mit einem Teil der Innenseite der genannten Gießmündung (8) über einen eine Nute aufweisenden geschwächten Gelenkabschnitt (13) einstückig verbunden ist,
c) einen Spaltraum (14), der zwischen dem Deckel (12) und der Innenfläche der Gießmündung (8) ausgebildet ist,
d) einen Verbundfilm (15) mit einer Metallfolie (20), die auf ihren beiden Seiten mit Kunstharzschichten (17, 18) überzogen und derart befestigt ist, daß sie sowohl die obere Seite des Deckels (12) als auch die obere Seite der Gießmündung (8) übergreift, und der mit einem Knickabschnitt (16) zum Ablösen dieses Filmes von der Gießmündung versehen ist,
e) wobei diese Gießmündung (8) einen Befestigungsabschnitt (11) aufweist, um sie an der Mündung des Behälters zu befestigen,
dadurch gekennzeichnet, daß
f) der genannte Spaltraum (14) mit Ausnahme des Gelenkabschnittes (13) entlang dem gesamten Umfang der Gießmündung (8) ausgebildet ist;
g) der genannte Verbundfilm (15) mit der oberen Endfläche der Gießmündung (8) in der Weise thermisch verbunden ist, daß er relativ fest an einem ringförmigen Teil (22) dieser oberen Endfläche und relativ schwach am benachbarten Teil (24) dieser oberen Endfläche verbunden ist.

2. Verfahren zur Herstellung einer Öffnungs-/Verschlußvorrichtung für einen Behälter, enthaltend folgende Schritte:
a) Bildung einer zylindrischen Gießmündung (8) aus Kunstharz, enthaltend einen Befestigungsabschnitt (11) zum Befestigen der Gießmündung an der Mündung des Behälters und ein zylindrisches oberes Ende mit einem ringförmigen Vorsprung (22'), der sich von dessen Endoberfläche erstreckt, wobei ein Deckel (12) über einen Gelenkabschnitt (13) einstückig mit der Innenseite dieser Gießmündung verbunden ist,
b) Vorsehen eines Verbundfilmes (15), der aus einer Metallfolie (20) hergestellt ist, die auf ihren beiden Seiten mit Kunstharzschichten (17, 18) beschichtet ist, und Positionierung dieses Verbundfilmes (15) in der Weise, daß er sowohl die obere Endfläche dieser Gießmündung (8) als auch die Oberfläche dieses Deckels (12) übergreift,
c) Positionierung eines Stütztisches (25) auf der Innenseite unterhalb des Deckels (12) und unter dem genannten Befestigungsabschnitt (11),
d) Positionierung des Verbundfilmes (15) sowohl auf der Oberfläche des Vorsprunges (22') als auch auf der Oberfläche des Deckels (12);
e) und thermisches Verbinden dieses Verbundfilmes (15) mit dem genannten Vorsprung (22') und dem Deckel (12), indem diese erwärmt und zusammengepreßt werden, wodurch dieser Verbundfilm (15) relativ fest in jenem Teil der oberen Endfläche verbunden ist, der den genannten Vorsprung (22') und seine unmittelbare Nähe enthält, während er relativ schwach mit dem benachbarten Teil (24) dieser oberen Endfläche verbunden wird.

## Revendications

1. Dispositif d'ouverture/fermeture pour récipient (2, 3, 4, 9), comprenant :
a) un bec verseur cylindrique (8) fait d'une résine synthétique,
b) un couvercle (12) relié en une seule pièce à une partie intérieure dudit bec verseur (8), par l'intermédiaire d'une partie affaiblie (13) formant charnière qui présente une rainure,
c) un espace libre (14) formé entre ledit couvercle (12) et la surface intérieure dudit bec verseur (8),
d) un film composite (15) qui comprend une pellicule métallique (20) avec des couches de résine synthétique (17, 18) déposées sur ses deux surfaces, et fixé de manière à couvrir à la fois la surface supérieure dudit couvercle (12) et la surface supérieure dudit bec verseur (8), et muni d'une partie de prise (16) pour détacher ledit film dudit bec verseur,
e) ledit bec verseur (8) ayant une partie de montage (11) servant à le monter sur la bouche de récipient,
caractérisé en ce que :
f) ledit espace libre (14) est formé sur toute la circonférence dudit bec verseur (8), sauf sur ladite partie charnière (13) ;
g) ledit film composite (15) est fixé sur la surface d'extrémité supérieure dudit bec verseur (8) par voie thermique de telle manière qu'il soit fixé relativement fortement sur une partie annulaire (22) de ladite surface d'extrémité supérieure et fixé relativement faiblement à la partie adjacente (24) de ladite surface d'extrémité supérieure.

2. Procédé de fabrication d'un dispositif d'ouverture/fermeture pour récipient comprenant les phases suivantes :
a) former un bec verseur cylindrique (8) en résine synthétique qui comprend une partie de montage (11) permettant de monter le bec verseur sur la bouche d'un récipient, et une extrémité supérieure cylindrique munie d'une saillie annulaire (22') qui s'élève sur sa surface d'extrémité, un couvercle (12) étant fixé en une seule pièce à la surface intérieure dudit bec verseur par l'intermédiaire d'une partie charnière (13),
b) préparer un film composite (15) fait d'une pellicule métallique (20) revêtue de couches de résine synthétique (17, 18) sur ses deux surfaces, et positionner ledit film composite (15) de manière à recouvrir à la fois la surface d'extrémité supérieure dudit bec verseur (8) et la surface dudit couvercle (12),
c) positionner une table d'appui (25) contre la surface intérieure au-dessus dudit couvercle (12) et sous ladite partie de montage (11),
d) positionner le film composite (15) à la fois sur la surface de ladite saillie (22') et sur la surface dudit couvercle (12),
e) fixer ledit film composite (15) à ladite saillie (22') et audit couvercle (12) par voie thermique en les chauffant et en les pressant l'un contre l'autre, de sorte que le film composite (15) est fixé relativement fortement dans la partie de la surface d'extrémité supérieure qui comprend ladite saillie (22'), et la région proche, et est fixé relativement faiblement à la partie adjacente (24) de ladite surface d'extrémité supérieure.
